(19) **Europäisches Patentamt**
**European Patent Office**
**Office européen des brevets**

(11) **EP 4 769 012 A1**

## (12) EUROPEAN PATENT APPLICATION
published in accordance with Art. 153(4) EPC

(43) Date of publication:
**01.07.2026 Bulletin 2026/27**

(21) Application number: **25824880.6**

(22) Date of filing: **23.05.2025**

(51) International Patent Classification (IPC):
*G02C 7/06* $^{(2006.01)}$

(86) International application number:
**PCT/CN2025/096870**

(87) International publication number:
**WO 2026/001478 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.06.2024 CN 202410827784**

(71) Applicant: **Shenzhen Thondar Technology Co.,
Ltd**
**Shenzhen, Guangdong 518000 (CN)**

(72) Inventors:
• **GAO, Fan**
**Shenzhen, Guangdong 518000 (CN)**
• **DONG, Xuechuan**
**Shenzhen, Guangdong 518000 (CN)**
• **XIONG, Lili**
**Shenzhen, Guangdong 518000 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **PERIPHERAL DEFOCUS CONTROL LENS AND MANUFACTURING METHOD**

(57) The present application relates to the technical field of optical lenses, and discloses a peripheral defocus control lens and a manufacturing method therefor. The peripheral defocus control lens, includes a substrate, a microlens array and a free-form surface; the substrate is a main body region of the lens and has a spherical surface; the microlens array is arranged at an outer surface of the substrate and is configured to provide myopic defocus; and the free-form surface is distributed at an inner surface of the substrate and is configured to compensate for or filter refractive deviations among peripheral refractions of a human eye.

FIG. 1

**EP 4 769 012 A1**

**Description**

**Related Application**

The present application claims priority to Chinese Patent Application No. 202410827784.9, filed on June 25, 2024, the entire contents of which are incorporated herein by reference.

**TECHNICAL FIELD**

The present application relates to the technical field of optical lenses, and in particular to a peripheral defocus control lens and a manufacturing method therefor.

**BACKGROUND**

The problem of adolescent myopia has become an important social problem. Medically, myopia is a type of refractive error. For emmetropic eyes, central and peripheral objects will be imaged on the retina. However, due to the enlargement of the eye axis, in the relaxed state of accommodation, central and peripheral objects will be imaged in front of the retina, making it difficult to see distant objects clearly. When myopic people wear single vision glasses to correct their vision, although the central imaging will ensure clear vision at the retinal macula, the monofocal characteristics of single vision glasses will cause the peripheral imaging to fall on the posterior side of the peripheral retina. This situation is called hyperopic defocus in the theory of myopic defocus, which will continue to stimulate the development and growth of the eye axis and accelerate the development of myopia. The multi-point defocus frame lens based on the microlens array is one of the current mainstream means to control the development of myopia. Its main working principle is to provide photometric compensation for the central macular refractive error of the retina while introducing a microlens array structure on the front surface of the lens. The microlens array can provide additional diopter, that is, defocus amount, causing some light around the retina to converge in advance, so that this part of hyperopic defocus turns into myopic defocus, thereby inhibiting the excessive growth of the eye axis.

However, the multi-point microlens defocus lenses on the market have fixed microlens arrangements and corresponding defocus amounts for different human eyes, and the lenses always provide the same defocus stimulation. However, the peripheral refractive values of different human eyes are not uniformly distributed. It is closely related to the structure and refractive index uniformity of media such as the cornea, lens, and vitreous body of the human eye, and this difference is different for everyone. Therefore, the traditional single-scheme multi-point microlens defocus lens is difficult to effectively control the peripheral refractive deviation of the human eye that varies from person to person during use, making it difficult for the entire retina to achieve the expected defocus amount and fail to achieve the expected treatment effect.

The above content is only used to assist in understanding the technical solution of the present application, and does not mean that the above content is recognized as prior art.

**SUMMARY**

The main purpose of the present application is to provide a peripheral defocus control lens and a manufacturing method therefor, aiming to solve the technical problem that the traditional single-point microlens defocus lens is difficult to effectively control the peripheral refractive deviation of the human eye that varies from person to person during use, making it difficult for the entire retina to achieve the expected defocus amount and fail to achieve the expected treatment effect.

To achieve the above purpose, the present application provides a peripheral defocus control lens, which includes: a substrate, a microlens array and a free-form surface.

The substrate is a main body region of the lens and has a spherical surface.

The microlens array is arranged at an outer surface of the substrate and is configured to provide myopic defocus

The free-form surface is distributed at an inner surface of the substrate and is configured to compensate for or filter refractive deviations among peripheral refractions of a human eye.

In an embodiment, the substrate is provided with a central optical zone and an annular zone, and the annular zone includes an annular defocus zone and a defocus compensation zone; the central optical zone is provided at a center of the substrate and is configured to correct central ametropia of the human eye; the annular zone surrounds the central optical zone; the annular defocus zone is provided at the outer surface of the substrate, and the microlens array is arranged in the annular defocus zone; and the defocus compensation zone is provided at the inner surface of the substrate, and the free-form surface is distributed in the defocus compensation zone.

In an embodiment, a position of the free-form surface corresponds to a position of the microlens array to compensate for or filter refractive deviations among peripheral refractions of the human eye.

In an embodiment, the microlens array is arranged in a ten-ring array, the microlens array includes a plurality of microlenses, and each of the microlenses is equidistantly arranged in a tangential direction.

In an embodiment, each of the microlens has a diameter of 1.0 mm, a center-to-center distance between adjacent microlenses is 1.5 mm, and a distance between a center of an innermost microlens of the microlens array and a center of the central optical zone is 5 mm.

In an embodiment, the central optical zone has a radius of less than 4.5 mm, and the annular zone has a radius ranging from 4.5 mm to 20.5 mm.

In an embodiment, a number of microlenses in each ring of the ten-ring array of the microlens array is 20, 26, 32, 38, 44, 50, 56, 62, 68 and 74 sequentially from the inside to the outside, and the microlenses in each ring are uniformly and equidistantly distributed in a circular array on the respective ring.

In an embodiment, each of the microlens has a defocus amount ranging from 1.0 D to 5.0 D.

In addition, to achieve the above-mentioned purpose, the present application also proposes a method for manufacturing a peripheral defocus control lens, which is applied to the peripheral defocus control lens as described above, and the method for manufacturing a peripheral defocus control lens includes:

acquiring central refractive information of a macula at the center of a retina of a human eye, and peripheral refractive information corresponding to the periphery of the retina within different field angles of the human eye;

determining a relative refractive distribution matrix of the human eye according to the central refractive information and the peripheral refractive information;

performing inversion on the relative refractive distribution matrix of the human eye to obtain a surface height matrix; and

manufacturing the peripheral defocus control lens based on the surface height matrix.

In an embodiment, the central refractive information includes spherical power and cylindrical power, and the determining the relative refractive distribution matrix of the human eye according to the central refractive information and the peripheral refractive information includes:

determining a central diopter of the macula at the center of the retina of the human eye according to the spherical power and the cylindrical power;

extracting peripheral refractive distribution data corresponding to different field angles of the human eye from the peripheral refractive information; and

subtracting the central diopter from the peripheral refractive distribution data to obtain the relative refractive distribution matrix of the human eye.

The present application proposes a peripheral defocus control lens, which includes: a substrate, a microlens array and a free-form surface. The substrate is a main body region of the lens and has a spherical surface. The microlens array is arranged at an outer surface of the substrate and is configured to provide myopic defocus. The free-form surface is distributed at an inner surface of the substrate and is configured to compensate for or filter refractive deviations among peripheral refractions of a human eye. Since the present application introduces a free-form surface on the inner surface of the lens based on the microlens array, the defocus of the central position and the peripheral position of the human retina can be corrected or filtered at the same time, thereby reducing the influence of the difference in the peripheral refractive distribution of the human eye on the myopic defocus formed by the microlens array, and further improving the myopia prevention and control effect of the lens.

**BRIEF DESCRIPTION OF THE DRAWINGS**

FIG. 1 is a schematic structural diagram of a peripheral defocus control lens according to a first embodiment of the present application.

FIG. 2 is a schematic diagram of the ideal human eye multi-point microlens defocus effect of the peripheral defocus control lens according to the first embodiment of the present application.

FIG. 3 is a schematic diagram of the actual human eye multi-point microlens defocus effect of the peripheral defocus control lens according to the first embodiment of the present application.

FIG. 4 is a schematic diagram of the actual human eye multi-point microlens defocus compensation effect of the peripheral defocus control lens according to the first embodiment of the present application.

FIG. 5 is a schematic diagram of the actual human eye multi-point microlens defocus filtering effect of the peripheral defocus control lens according to the first embodiment of the present application.

FIG. 6 is a schematic structural diagram of the peripheral defocus control lens according to a second embodiment of the present application.

FIG. 7 is a distribution diagram of a multi-point microlens array of the peripheral defocus control lens according to the second embodiment of the present application.

FIG. 8 is a refractive distribution diagram of the peripheral defocus control lens according to the second embodiment of the present application.

FIG. 9 is a refractive distribution diagram of a relative refractive distribution matrix and a defocus compensation zone of the peripheral defocus control lens according to the second embodiment of the present application.

FIG. 10 is a schematic diagram illustrating a division of a radial refractive meridian of a lens of the peripheral defocus control lens according to the second embodiment of the present application.

FIG. 11 is a flow chart of a method for manufacturing the peripheral defocus control lens according to the first embodiment of the present application.

FIG. 12 is a schematic diagram of the defocus control lens fitting process of a method for manufacturing the peripheral defocus control lens according to the first embodiment of the present application.

The realization of the purpose, functional characteristics and advantages of the present application will be further described in combination with the embodiments and with reference to the accompanying drawings.

## DETAILED DESCRIPTION OF THE EMBODIMENTS

It should be understood that the specific embodiments described herein are only used to explain the present application and are not intended to limit the present application.

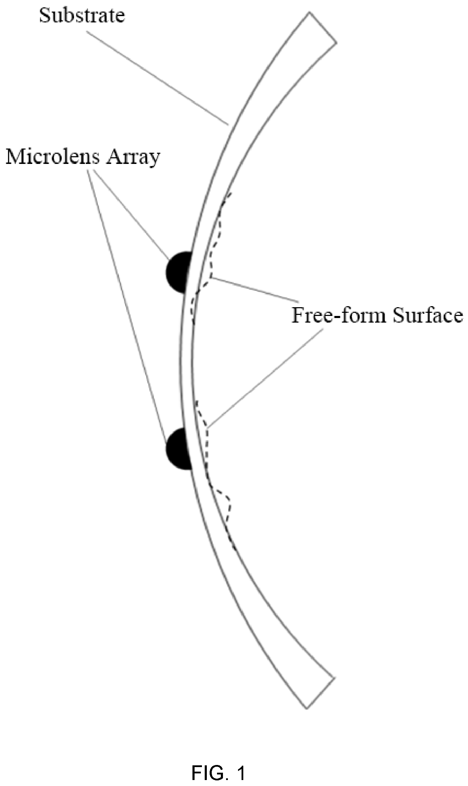

The embodiment of the present application provides a peripheral defocus control lens. Referring to FIG. 1, FIG. 1 is a schematic structural diagram of the peripheral defocus control lens according to a first embodiment of the present application.

It should be noted that studies have shown that the growth of the eye axis is closely related to the defocus state of peripheral retinal imaging. Periretinal hyperopic defocus can promote the growth of the eye axis and accelerate the development of myopia, while periretinal myopic defocus can inhibit the growth of the eye axis and delay the development of myopia. Although traditional single vision lenses can effectively correct the central ametropia of the simulated eye's retina and ensure that the simulated eye sees objects clearly, they will promote hyperopic defocus around the simulated eye, thereby further aggravating the development of myopia.

Therefore, multi-point defocus frame lenses based on microlens arrays are one of the mainstream means to control the development of myopia. They have the advantages of low price, simple fitting process, wide application population, suitability for individuals with high refractive errors, and low eye hygiene requirements. Its main working principle is to introduce a microlens array structure on the front surface of the lens while providing refractive error compensation for the central macula of the retina. The microlens array can provide additional diopter, that is, defocus amount, causing some light around the retina to converge in advance, so that this part of the hyperopic defocus is transformed into myopic defocus, thereby suppressing the excessive growth of the eye axis. At the same time, the refractive power between the microlenses is still the macular refractive error compensation refractive power.. This ensures the comfort of the simulated eye when looking at objects through this area.

However, for multi-point microlens defocus lenses on the market, the microlens arrangement and the corresponding defocus values are fixed and do not vary among different individuals. Therefore, such lenses always provide the same defocus stimulation. Studies have shown that the central and peripheral refractions of the human eye reflect the ability of the medium in different viewing angle channels of the human eye to deflect light, and its refractive value is related to many factors such as the refractive index, curvature, and uniformity of the medium in the medium channel. The peripheral refraction varies among different individuals and is not uniformly distributed, so the distribution of defocus state around the retina of the human eye is "different from person to person". Therefore, wearing such traditional multi-point microlens defocus lenses entails two risks. One is that the uneven distribution of peripheral refractive power of individual human eyes will cause insufficient myopic defocus formed by the microlens. If a certain position around the human eye is hyperopic defocus, then although the microlens on the corresponding lens at that position can convert part of the hyperopic defocus at that position into myopic defocus, the myopic defocus is lower than the design value. The stimulation to the human eye will also be reduced. Second, there is still hyperopic defocus between microlenses, which will compete with the myopic defocus provided by nearby microlenses, thus affecting the effect of microlenses on myopia prevention and control to a certain extent. Therefore, the traditional single-scheme multi-point microlens defocus lens is difficult to effectively control the peripheral refractive deviation of the human eye that varies from person to person during use, making it difficult for the entire retina to achieve the expected defocus amount and the expected treatment effect.

To solve the above problems, based on FIG. 1, a first embodiment of the peripheral defocus control lens of the present application is proposed.

In this embodiment, the peripheral defocus control lens includes: a substrate, a microlens array and a free-form surface.

The substrate is the main body region of the lens and has a spherical surface.

The microlens array is arranged on the outer surface of the substrate to provide myopic defocus.

The free-form surface is distributed on the inner surface of the substrate to compensate for or filter the refractive deviation among the peripheral refractions of the human eye.

The substrate is the main body region of the peripheral defocus control lens, which is spherical surface and made of transparent material for correcting vision problems. The substrate can usually be made of plastic or glass, with specific optical properties. By adjusting the power and curvature of the lens to change the refraction and focus of light, it helps people correct vision problems such as myopia, hyperopia, and cylindrical power to obtain the best visual effect. The corresponding diopter of the substrate meets the eyeglass prescription, ensuring clear vision of the central retinal spot. This embodiment does not limit this.

The microlens array is an array formed by arranging tiny lenses together, which can focus light to a specific area of the eye. Each microlens is able to adjust the refraction of light, creating a specific optical effect between the eye and an object. Arranging a microlens array on glasses can be used for myopia correction. By adjusting the refractive power of the microlens, it can help myopic patients obtain clear vision.

Taking the spherical surface as an example, the inner surface is the concave side of the spherical surface, that is, the side of the lens close to the human eye; the outer surface is the convex side of the spherical surface, that is, the side of the lens away from the human eye.

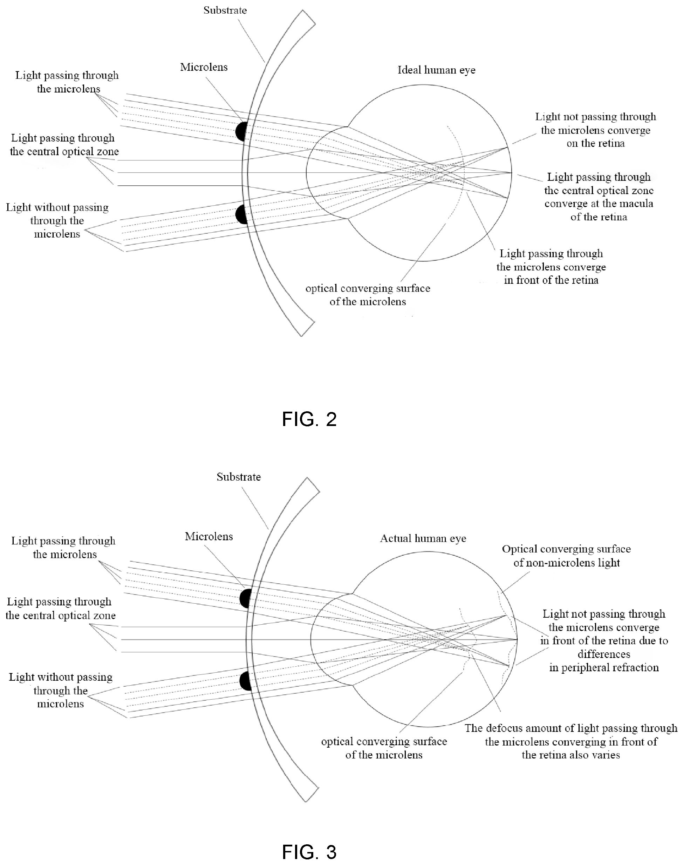

For ease of understanding, referring to FIG. 2, FIG. 2 is a schematic diagram of the ideal human eye multi-point microlens defocus effect of the peripheral defocus control lens according to the first embodiment of the present application. The lens of a traditional multi-point microlens defocus lens consists of two parts: a substrate, the corresponding refractive power meets the eyeglass prescription to ensure clear vision of the central spot of the retina, and a microlens array, which is usually arranged in an annular area in the center of the lens to provide additional myopic defocusing. Ideally, after the lens corrects myopia, both the central and peripheral imaging objects are on the retina. The light passing through the central optical zone converges at the retinal macula; after the introduction of the microlens structure, the light that has not passed through the microlens is focused on the retina; and the light that has passed through the microlens is converged on the front side of the retina (as shown in FIG. 2, that is, converged on the optical convergence surface passing through the microlens), thereby forming myopic defocus. Since the defocus amount of traditional multi-point microlens defocus lenses is fixed, their defocus amounts are consistent.

However, compared with the ideal human eye, the actual peripheral refraction of the human eye is not uniformly distributed in all positions, and there are obvious differences in different positions. Therefore, the actual defocusing situation of the multi-point microlens defocus lens is shown in FIG. 3, FIG. 3 is a schematic diagram of the actual human eye multi-point microlens defocusing effect of the peripheral defocus control lens according to the first embodiment of the present application. As shown in FIG. 3, at this time, the light that has not passed through the microlens is not focused on the retina due to the difference in peripheral refraction. It may be in front of the retina (the optical convergence surface without passing through the microlens as shown in FIG. 3) or behind the retina. The defocus and the amount of defocus vary from person to person, whether it is hyperopic or myopic. Although the light passing through the microlens is focused on the front side of the retina to form myopic defocus, the defocus state at different positions is not consistent, and the defocus amount converged in front of the retina is also different. If the human eye itself has hyperopic defocus at this position, then the defocus formed by the corresponding microlens at that position will be significantly lower than the defocus amount designed for the microlens.

Therefore, the embodiment of the present application proposes a free-form surface to achieve defocus compensation or screening.

It should be noted that the free-form surface is distributed on the inner surface of the substrate, as shown in FIG. 1, and its position corresponds to the outer microlens array. Its refractive power is related to the relative refractive power distribution of the human eye, which is used to compensate for or screen the different peripheral refractive deviations of the human eye.

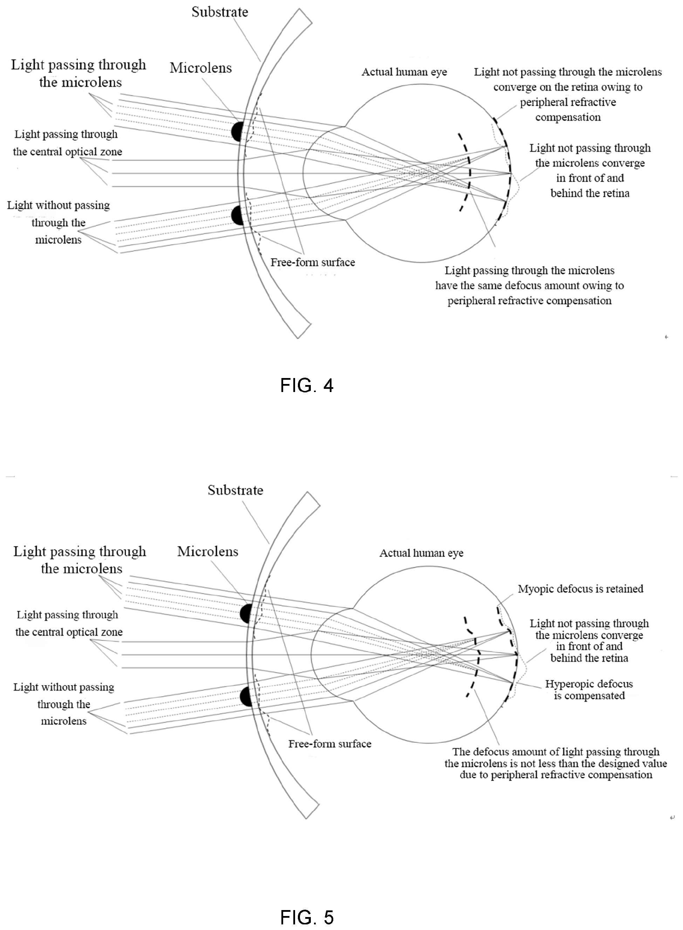

For ease of understanding, referring to FIG. 4, FIG. 4 is schematic diagram of the actual human eye multi-point microlens defocus compensation effect of a peripheral defocus control lens according to the first embodiment of the present application. As shown in FIG. 4, the dotted line at the retina of the human eye in the figure represents the retinal defocus state of the human eye itself. The light that has not passed through the microlens converges before and after the retina, and there is both myopic defocus on the front side of the retina and hyperopic defocus on the back side of the retina. Since a free-form surface is added behind the lens substrate, the refractive distribution of the free-form surface compensates for the difference in peripheral refraction of the human eye. The light that does not pass through the microlens converges on the retina due to peripheral refraction compensation, and the light that passes through the microlens has the same defocus amount due to peripheral refraction compensation. That is, after compensation, the focus position of the light is adjusted from the original front or back side of the retina to the retina, that is, the myopia and hyperopic defocus around the retina are controlled to be in a emmetropic state. With the microlens, the myopic defocus amount generated by the multi-point microlens will remain consistent.

Further, the free-form surface can not only perform defocus compensation but also be further screened. Referring to FIG. 5, FIG. 5 is a schematic diagram of the actual human eye multi-point microlens defocus filtering effect of a peripheral defocus control lens according to the first embodiment of the present application. As shown in FIG. 5, the dotted line at the retina of the human eye in the figure represents the retinal defocus state of the human eye itself. The light that has not passed through the microlens converges before and after the retina, and there is both myopic defocus on the front side of the retina and hyperopic defocus on the back side of the retina. Since a free-form surface is added behind the lens substrate, the refractive distribution of the free-form surface can screen and control the difference in peripheral refraction of the human eye. For hyperopic defocus in the dotted line at the retina, since there is a risk of promoting myopia progression, the free-form surface in the lens compensates it to an emmetropic state in the corresponding area, and the hyperopic defocus is compensated. For myopic defocus in the dotted line at the retina, it has an inhibitory effect on myopia progression. The free-form surface of the lens corresponds to zero refractive power in the area, allowing it to be effectively preserved. In this way, the myopic defocus can be retained to the maximum extent, the hyperopic defocus is suppressed to the maximum extent, and the light passing through the microlens is compensated for peripheral refractive power, so that the final defocus is not less than the final design value. Therefore, based on the multi-point microlens defocus lens, a free-form surface with annular distribution is introduced on the rear surface of the lens, which can correct or screen the defocus at the central position and peripheral position of the human retina at the same time, so that the multi-point microlens can meet the expected defocus amount and reduce the risk of myopia progression caused by hyperopic defocus in the human eye. This method can make the defocus value of each position of the retina not lower than the preset defocus amount, thereby achieving the preset treatment effect.

This embodiment proposes a peripheral defocus control lens, which includes: a substrate, a microlens array and a free-form surface. The substrate is the main area of the lens and has a spherical surface. The microlens array is arranged on the outside of the substrate to provide myopic defocus. The free-form surface is distributed on the inner surface of the substrate to compensate for or screen the refractive deviation in the peripheral refractions of the human eye. Since this embodiment introduces a free-form surface with an annular distribution on the rear surface of the lens based on the multi-point microlens defocus lens, the defocus at the center and peripheral positions of the human retina can be corrected or screened at the same time, so that the multi-point microlens can provide the expected defocus amount and reduce the risk of myopia progression caused by hyperopic defocus in the human eye. This method ensures that the defocus value at each position on the retina is not lower than the preset defocus amount, so as to achieve the preset treatment effect.

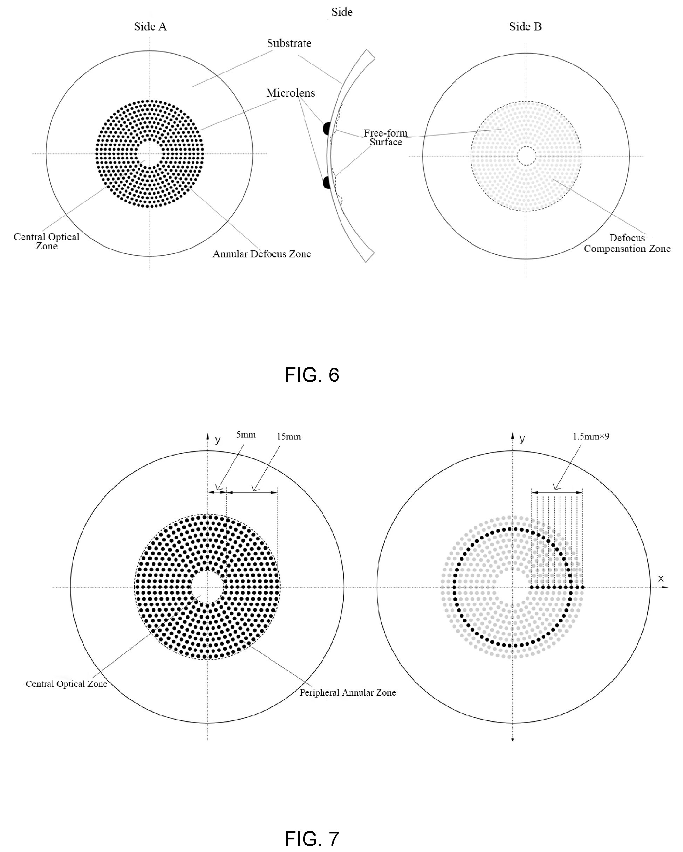

Referring to FIG. 6, FIG. 6 is a schematic structural diagram of the peripheral defocus control lens according to a second embodiment of the present application.

Based on the above-mentioned first embodiment, in this embodiment, the substrate is provided with a central optical zone and an annular zone, and the annular zone includes an annular defocus zone and a defocus compensation zone.

The central optical zone is provided at a center of the substrate and is configured to correct central ametropia of the human eye.

The annular zone surrounds the central optical zone.

The annular defocus zone is provided at the outer surface of the substrate, and the microlens array is arranged in the annular defocus zone.

The defocus compensation zone is provided at the inner surface of the substrate, and the free-form surface is distributed in the defocus compensation zone.

The central optical zone is realized by a spherical structure of the substrate, located in the center of the substrate, and the corresponding diopter meets the eyeglass prescription, ensuring clear vision of the central retinal spot, which can correct the central ametropia of the human eye.

The annular zone is an annular area immediately outside the central optical zone. The annular defocus zone is the area where the microlens array is arranged, that is, it is located outside the substrate. The defocus compensation zone is an area with a free-form surface, that is, located on the inner surface of the substrate.

Further, the position of the free-form surface in this embodiment corresponds to the position of the microlens array to compensate for or screen the refractive deviation in the peripheral refraction of the human eye.

For ease of understanding, as shown in FIG. 6, the defocus control lens is a spherical surface, with the inner surface being the concave side of the spherical surface and the outer surface being the convex side of the spherical surface. FIG. 6 shows a schematic diagram of the three-view structure of the peripheral defocus control lens. It is divided into A-side, side and B-side, where A-side refers to the side of the lens away from the human eye, that is, the outside of the substrate; B-side refers to the side of the lens close to the human eye, that is, the inside of the substrate. The lens is functionally divided into three main parts: the first is the substrate, which is the main body region of the lens. It is mainly spherical and has a corresponding diopter that meets the eyeglass prescription. The second is the microlens array, which is usually arranged in an annular area on the A side of the lens to provide additional myopic defocus. The third is the free-form surface, which is an annular area distributed on the B side of the lens. The refractive power is related to the relative refractive power distribution of the human eye and is used to compensate or screen for the different peripheral refractive deviations of the human eye.

The lens is mainly divided into four regions: one is the central optical zone, which is realized by the spherical structure of the substrate. The corresponding diopter meets the eyeglass prescription and ensures clear vision of the central spot of the retina. The second is the annular defocus zone on the A surface, on which microlens arrays are arranged to provide additional myopic defocus. The refractive power of the area between the microlens arrays is still a substrate spherical structure, and the corresponding refractive power meets the prescription for wearing glasses to ensure the comfort and adaptability of wearing glasses. The third is the defocus compensation zone of the B surface, whose position corresponds to the annular defocus zone. The layout of the free-form surface is used to compensate for or screen the peripheral refractive deviation of different eyes. The fourth is the extension area, which is realized by a substrate spherical structure.

When wearing the lens, the annular area around the lens corrects or screens the individual's peripheral defocus, thereby reducing the influence of the difference in refractive distribution around the human eye on the myopic defocus caused by multi-point microlens lenses, and further improving the myopia prevention and control effect of the lens.

Further, referring to FIG. 7, FIG. 7 is a distribution diagram of a multi-point microlens array of the peripheral defocus control lens according to the second embodiment of the present application. In this embodiment, the microlens array is arranged in a ten-ring array, and the microlens array includes a plurality of microlenses, each of which is equidistantly arranged in the tangential direction.

On the side where the microlenses are arranged, 10 rings of microlenses can be arranged. This ensures that 10 equidistant microlenses are arranged in the tangential direction of the horizontal x positive direction of the lens. The number of rings of the microlens array can also be eleven, twelve, etc., which are set according to actual conditions and are not limited in this embodiment.

Further, in this embodiment, the diameter of the microlens is 1.0 mm, the center-to-center distance between adjacent microlenses is 1.5 mm, and the distance between the center of the innermost microlens of the microlens array and the center of the central optical zone is 5 mm.

Further, in this embodiment, the area radius of the central optical zone is less than 4.5 mm, and the radius of the annular area is between 4.5 mm and 20.5 mm.

Further, the defocus amount of the microlens described in this embodiment ranges from 1.0 D to 5.0 D.

The above-mentioned diameter data can be set according to actual conditions, and this embodiment does not limit this.

Further, the number of microlenses in each ring of the ten-ring array of the microlens array is 20, 26, 32, 38, 44, 50, 56, 62, 68 and 74 sequentially from the inside to the outside, and the microlenses in each ring are uniformly and equidistantly distributed in a circular array on the respective ring.

The number of microlenses in each ring can be increased or decreased according to actual conditions to improve the comfort and accuracy of the peripheral defocus control lens, which is not limited in this embodiment.

For ease of understanding, FIG. 7 is used as an example for explanation, but this scheme is not limited. With the center of the lens as the center, the area with a lens radius less than 4.5mm can be the central optical zone of the lens. The refractive power corresponds to the optometry prescription and is used to ensure the wearer's clarity of vision. The annular zone with a lens radius greater than 4.5 mm and less than 20.5 mm can be an annular area around the lens, in which a microlens array is arranged on one side of the lens to provide design myopic defocus. On one side of the microlens, 10 rings of microlenses can be arranged to ensure that 10 equidistant microlenses are arranged in the horizontal x-positive direction or y-positive direction of the lens. The radius of the annular area and the central optical zone can be 15 mm. The diameter of the microlens can be 1.0 mm, and the center distance between adjacent microlenses can be 1.5 mm, that is, the annular radius of the annular zone can be 1.5*9 mm. The distance between the center of the innermost (1st ring) microlens and the center of the lens can be 5 mm. The number of microlenses in each ring can be 20, 26, 32, 38, 44, 50, 56, 62, 68, 74 from the inside to the outside. Each ring of microlenses is uniformly and equidistantly distributed in a circumferential array on its respective ring, and the defocus range of all microlenses can be 1.0 D to 5.0 D.

Further, the manufacturing principle of the peripheral defocus control lens is as follows.

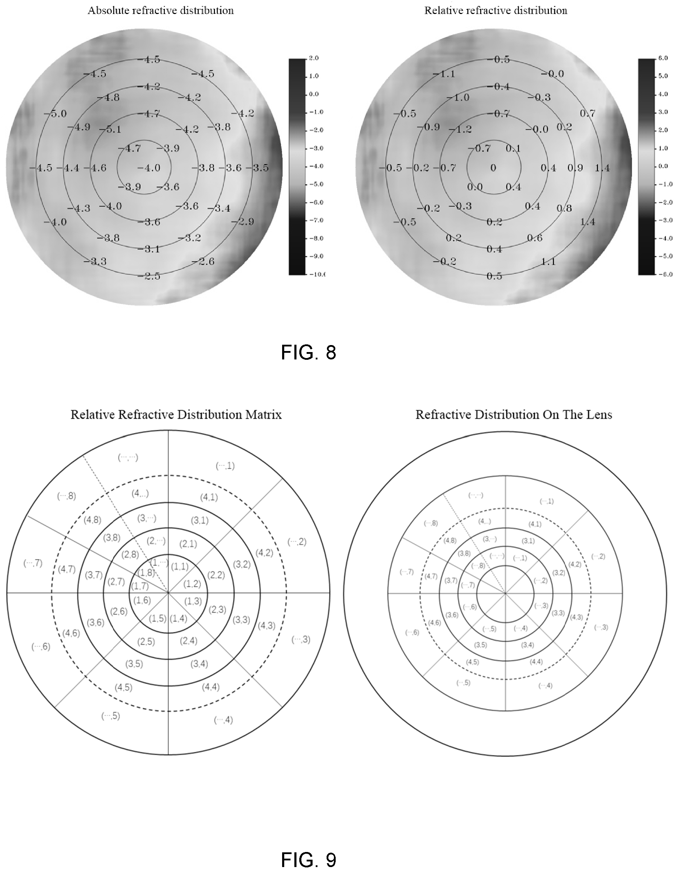

Referring to FIG. 8, FIG. 8 is refractive distribution diagram of a peripheral defocus control lens according to the second embodiment of the present application. The left figure shows the absolute refractive power distribution of human retina obtained by a refractive topographer. Each ring in the figure represents the interval of 5° field angle, and the number represents the equivalent spherical power corresponding to this field angle of retina. The equivalent spherical power at the center position is the equivalent spherical power (i.e. -4.0 diopters) of optometry prescription. The relative refractive distribution of the human retina can be obtained by subtracting the equivalent spherical power at the center from all peripheral refractive distribution values, that is, as shown in the figure on the right, this refractive distribution reflects the peripheral defocus state of the human retina after the refractive error is corrected.

Then, based on FIG. 8, the relative refractive distribution matrix and the refractive power of the lens defocus compensation zone are determined. Referring to FIG. 9, FIG. 9 is a refractive distribution diagram of a relative refractive distribution matrix and a defocus compensation zone of a peripheral defocus control lens according to the second embodiment of the present application. The peripheral refractive distribution in the right figure of FIG. 8 is divided into multiple regions according to the tangential and radial directions, and the average refractive value of each region is defined as $D(i, j)$. Among them, i corresponds to the number of tangential areas, j corresponds to the number of radial areas, and the numbers of i and j can be adjusted. The equivalent refractive value $D(i, j)$ of each area is equal to the average of all refractive values in the corresponding area of the peripheral refractive distribution diagram on the right side of FIG. 8. After obtaining the refractive distribution matrix in the left figure of FIG. 9, the values of the matrix are expanded from a circular distribution to an annular distribution, as shown in the right figure of FIG. 9. If the defocus control lens is required to compensate for differences in defocus of the human eye, the refractive compensation value of each area of the lens needs to be equal to the refractive value of the area corresponding to the relative refractive distribution of the human eye. If the defocus control lens is required to screen defocus of the human eye, usually in order to maximize the myopia prevention and control effect, you need to retain the myopic defocus around the human eye and compensate for the peripheral hyperopic defocus. If the area in the relative refractive distribution of the human eye is less than zero (myopic defocus), the refractive value of the corresponding area of the lens is designed to be zero without any correction. If the area in the relative refractive distribution of the human eye is greater than zero (hyperopic defocus), The refractive value of the corresponding area of the lens is designed to be equal to the refractive value of the relative refractive distribution, ensuring that it is no longer hyperopic defocus.

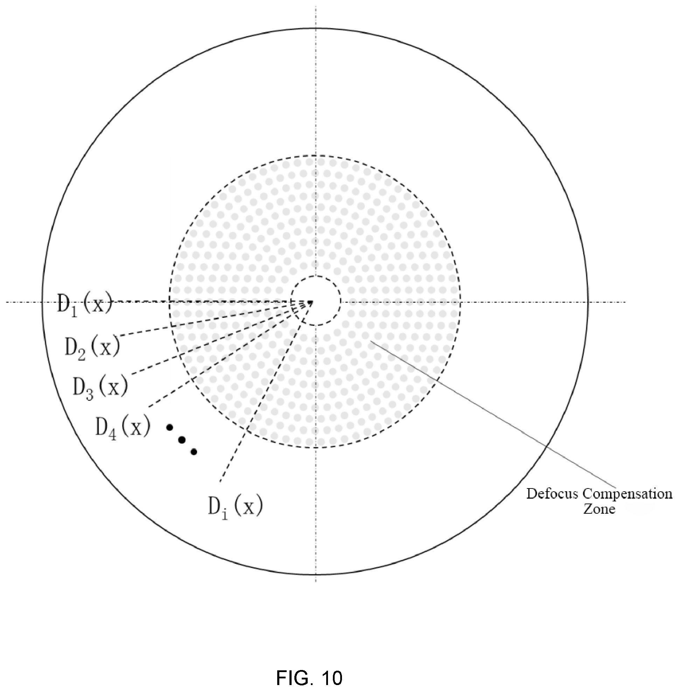

Finally, the radial refractive meridian of the lens is determined. Referring to FIG. 10, FIG. 10 is schematic diagram illustrating a division of a radial refractive meridian of a lens of the peripheral defocus control lens according to the second embodiment of the present application. The relationship between the radial position $\chi$ of a meridian in the lens space, the relative refractive distribution field angle $\theta$, and the vertex distance $d$ is as follows:

$$\chi = 2(d \times \tan\theta + 1.5mm)$$

The relationship between the center coordinates $(\xi,\eta)$ corresponding to the radius of curvature of each point on surface B of the lens is as follows:

$$\xi(x) = x - R(x)\sin\theta(x)$$

$$\eta(x) = R(x)\cos\theta(x) + \int_0^x \tan[\theta(x)]dx$$

Where R(x) is the radius of curvature of the corresponding point on the curve, and $\theta$(x) is determined by the following formula:

$$\sin(\theta) = \int_0^x \frac{1}{R(x)}dx$$

The sagittal height z(x) of the lens at this point satisfies the formula:

$$z(x) = \int_0^x \tan(\theta)dx$$

Let the refractive power of each point on the i-th meridian be Di(x), which is defined as: $D_i(x) = (n-1)/R(x)$, where n is the refractive index of the lens. According to the above formula, the final sagittal height and the corresponding curvature center position of each point can be directly calculated from the refractive power distribution of the meridian. The $D_i(x)$ curve ($D_1(x)$, $D_2(x)$, $D_3(x)$, $D_4(x)$, ..., $D_i(x)$ as shown in FIG. 10) is the profile data extracted from a certain direction on the original lens refractive power distribution map.

The peripheral defocus control lens thus produced has an effect as shown in FIG. 4. In the figure, the dotted line at the retina represents the retinal defocus state of the human eye. The light that does not pass through the microlens converges in front of or behind the retina, and there is both myopic defocus on the front side of the retina and hyperopic defocus on the back side of the retina. Since a free-form surfaceis added behind the lens substrate, the refractive distribution of the free-form surface compensates for the difference in peripheral refraction of the human eye. The light that does not pass through the microlens converges on the retina due to peripheral refraction compensation, and the light that passes through the microlens has the same defocus amount due to peripheral refraction compensation. That is, after compensation, the focus position of the light is adjusted from the original front or back side of the retina to the retina, that is, the myopia and hyperopic defocus around the retina are controlled to be in a emmetropic state. With the microlens, the myopic defocus amount generated by the multi-point microlens will remain consistent.

Further screening can be performed, as shown in FIG. 5. The dotted line at the retina of the human eye in the figure represents the defocus state of the retina of the human eye itself. The light that has not passed through the microlens converges before and after the retina. There is both myopic defocus on the front side of the retina and hyperopic defocus on the back side of the retina. Since a free-form surface is added behind the lens substrate, the refractive distribution of the free-form surface can screen and control the difference in peripheral refraction of the human eye. For hyperopic defocus in the dotted line at the retina, since there is a risk of promoting myopia progression, the free-form surface in the lens compensates it to an emmetropic state for the corresponding area, and the hyperopic defocus is compensated. For myopic defocus in the dotted line at the retina, it has an inhibitory effect on myopia progression. The free-form surface of the lens corresponds to zero refractive power in the area, allowing it to be effectively preserved. In this way, the myopic defocus can be retained to the maximum extent, the hyperopic defocus is suppressed to the maximum extent, and the light passing through the microlens is compensated for peripheral refractive power, so that the final defocus is not less than the final design value. Therefore, based on the multi-point microlens defocus lens, a free-form surface with annular distribution is introduced on the rear surface of the lens, which can correct or screen the defocus at the central position and peripheral position of the human retina at the same time, so that the multi-point microlens can meet the expected defocus amount and reduce the risk of myopia progression due to hyperopic defocus in the human eye. This method can make the defocus value of each position of the retina not lower than the preset defocus amount, thereby achieving the preset treatment effect.

In this embodiment, a central optical zone and an annular zone are provided on the substrate, and the annular zone includes an annular defocus zone and a defocus compensation zone; The center of the substrate is provided with a central optical zone, which is used to correct the central ametropia of the human eye; The annular zone surrounds the central optical zone; The outer surface of the substrate is provided with an annular defocus zone, and the microlens array is arranged in the annular defocus zone; The inner surface of the substrate is provided with a defocus compensation zone, and the free-form surface is distributed in the defocus compensation zone. The position of the free-form surface corresponds to the position of the microlens array to compensate for or screen the refractive deviation between the peripheral refractions of the human eye. When wearing the lens, the annular zone around the lens corrects or screens the individual's peripheral defocus, thereby reducing the influence of the difference in refractive distribution around the human eye on the myopic defocus caused by multi-point microlens lenses, and further improving the myopia prevention and control effect of the lens.

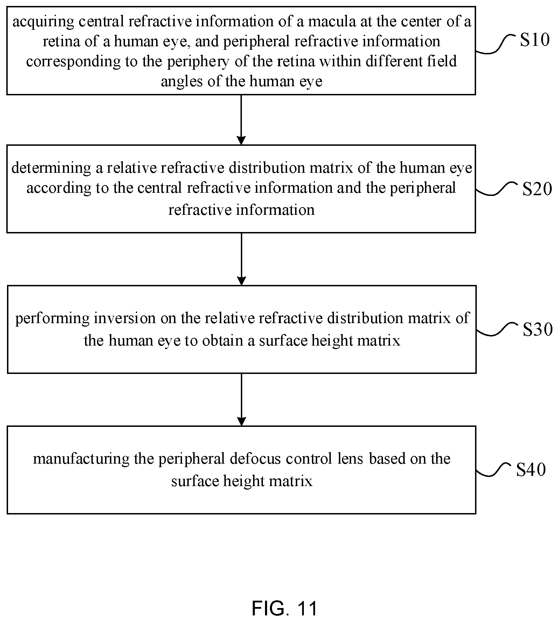

In addition, in order to achieve the above-mentioned purpose, the present application also provides a method for manufacturing the peripheral defocus control lens based on the peripheral defocus control lenses of the above-mentioned embodiments. Referring to FIG. 11, FIG. 11 is flow chart of a method for manufacturing a peripheral defocus control lens according to the first embodiment of the present application.

A first embodiment of the method for manufacturing a peripheral defocus control lens of the present application based on FIG. 11 is purposed.

In this embodiment, the method for manufacturing a peripheral defocus control lens includes following steps.

Step S10, acquiring central refractive information of a macula at the center of a retina of a human eye, and peripheral refractive information corresponding to the periphery of the retina within different field angles of the human eye.

The central refractive information refers to the refraction information of light received at the central macula of the human retina. The central macula is a small area located in the center of the retina that plays an important role in high resolution, detail and color perception. The way light is refracted at the central macula affects our ability to perceive details and colors of objects. Among them, the central refractive information may include information such as spherical power, cylindrical power and axial position.

The peripheral refractive information is the refraction information of light received at different positions around the retina of the human eye. The field angle refers to the angle range from the central line of sight to the peripheral line of sight, usually expressed in diopters. Light is refracted differently in different parts of the field angle, which affects our ability to perceive the clarity and shape of objects around us.

The changes in these refractive information can adjust the power of the glasses for correction to ensure that the visual experience is optimal both centrally and peripherally.

Step S20, determining a relative refractive distribution matrix of the human eye according to the central refractive information and the peripheral refractive information.

The human eye relative refractive distribution matrix is the human eye relative refractive distribution data determined based on the central refractive information and the peripheral refractive information.

In a specific implementation, the peripheral refractive power corresponding to different field angles of the human eye can be subtracted from the diopter at the central macula position to obtain the relative refractive distribution matrix of the human eye.

Further, the central refractive power information described in this embodiment includes spherical power and cylindrical power. The step S20 includes: determining a central diopter of the macula at the center of the retina of the human eye according to the spherical power and the cylindrical power; extracting peripheral refractive distribution data corresponding to different field angles of the human eye from the peripheral refractive information; and subtracting the central diopter from the peripheral refractive distribution data to obtain the relative refractive distribution matrix of the human eye.

The spherical power and the cylindrical power are metrics used to describe the refractive state of the eye. Among them, spherical power is used to describe the diopter of myopia (negative value) or hyperopia (positive value), which can represent the refractive power of the eye in diopter (D). If an eye has a diopter of -3.00 D, it means that the eye has 3 diopters of myopia. A positive value indicates the diopter of hyperopia. The cylindrical power is used to describe the difference in curvature of cornea or intraocular tissues, which leads to visual problems caused by inaccurate focus of light in the eye. Negative numbers can be used to represent the curvature of concave lens (cylindrical power), and positive numbers can be used to represent the curvature of convex lens (cylindrical power). The unit of cylindrical power is also diopter (D). For example, an cylindrical power of -1.50 D means that the eye has 1.5 diopters of cylindrical power.

Usually, eyeglass prescriptions can include spherical power and cylindrical power, as well as axial information. The axial direction indicates the direction of astigmatism, expressed in degrees, usually between 0 and 180 degrees. Through spherical power and cylindrical power, as well as axial information, the refractive state of the eye is corrected to make vision clearer and more comfortable.

In a specific implementation, the relative refractive distribution matrix of the human eye can be obtained by subtracting the refractive power at the central macula position from the peripheral refractive power corresponding to different field angles of the human eye, wherein the refractive power of the central macula of the retina is equal to the equivalent spherical power, which is numerically equal to the spherical power plus 1/2 of the cylindrical power.

Step S30, performing inversion on the relative refractive distribution matrix of the human eye to obtain a surface height matrix.

Step S40, manufacturing the peripheral defocus control lens based on the surface height matrix.

The surface height matrix is obtained by matrix inversion calculation of the relative refractive distribution matrix of the human eye.

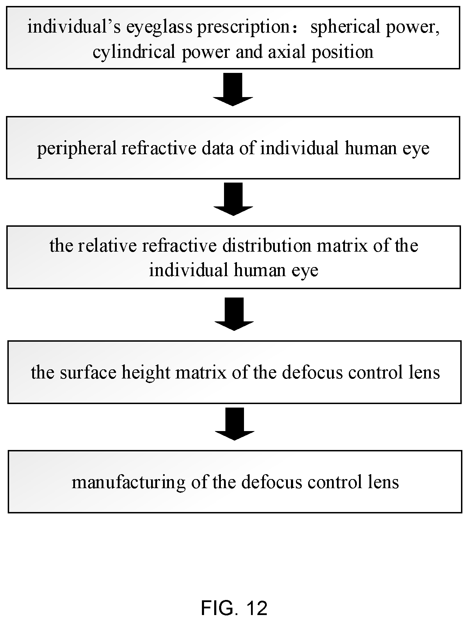

In actual implementation, referring to FIG. 12, FIG. 12 is a schematic diagram of the defocus control lens fitting process of a method for manufacturing a peripheral defocus control lens according to the first embodiment of the present application. The specific lens fitting process is as follows.

The first step is to obtain the individual's eyeglass prescription. The central refractive information of the position of the central macula of the individual human retina is identified by subjective or objective optometry for glasses, including spherical power, cylindrical power and axial position.

The second step is to obtain peripheral refractive data of individual human eyes. The equivalent spherical power of the retina periphery within different field angles of the individual human eye is obtained as peripheral refractive power using equipment such as refractive topography, wide-angle refractometer, and window refractometer.

The third step is to obtain the relative refractive distribution matrix of the individual human eye. The relative refractive distribution matrix of the human eye is obtained by subtracting the refractive power at the central macula position from the peripheral refractive power corresponding to different field angles of the human eye, where the central macular refractive power of the retina is equal to the equivalent spherical power, which is numerically equal to the spherical power plus 1/2 of the cylindrical power.

The fourth step is to obtain the surface height matrix of the defocus control lens. The surface height matrix of the defocus control lens is obtained by inversion calculation based on the relative refractive distribution matrix of the human eye.

The fifth step is to manufacture the defocus control lenses. Defocus lenses are made according to the lens surface height matrix.

For ease of understanding, the manufacturing principle of the peripheral defocus control lens is as follows. As shown in FIG. 8, the left figure is an absolute refractive distribution diagram of the human retina obtained by a refractive topographer. Each ring in the figure represents the interval of a 5° field angle, and the number represents the equivalent spherical power corresponding to the field angle of the retina. The equivalent spherical power at the center position is the equivalent spherical power of the optometry prescription (i.e. -4.0 D). The relative refractive distribution of the human retina can be obtained by subtracting the equivalent spherical power at the center from all peripheral refractive distribution values, that is, as shown in the figure on the right, this refractive distribution reflects the peripheral defocus state of the human retina after the refractive error is corrected.

Then, based on FIG. 8, the relative refractive distribution matrix and the refractive power of the lens defocus compensation zone are determined. As shown in FIG. 9, the peripheral refractive distribution in the right figure of FIG. 8 is divided into multiple regions according to the tangential and radial directions, and the average refractive value of each region is defined as D(i, j). Among them, i corresponds to the number of tangential areas, j corresponds to the number of radial areas, and the numbers of i and j can be adjusted. The equivalent refractive value D(i, j) of each area is equal to the average of all refractive values in the corresponding area of the peripheral refractive distribution diagram on the right side of FIG. 8. After obtaining the refractive distribution matrix in the left figure of FIG. 9, the values of the matrix are expanded from a circular distribution to an annular distribution, as shown in the right figure of FIG. 9. If the defocus control lens is required to compensate for differences in defocus of the human eye, the refractive compensation value of each area of the lens needs to be equal to the refractive value of the area corresponding to the relative refractive distribution of the human eye. If the defocus control lens is required to screen defocus of the human eye, usually in order to maximize the myopia prevention and control effect, you need to retain the myopic defocus around the human eye and compensate for the peripheral hyperopic defocus. If the area in the relative refractive distribution of the human eye is less than zero (myopic defocus), the refractive value of the corresponding area of the lens is designed to be zero without any correction. If the area in the relative refractive distribution of the human eye is greater than zero (hyperopic defocus), The refractive value of the corresponding area of the lens is designed to be equal to the refractive value of the relative refractive distribution, ensuring that it is no longer hyperopic defocus.

Finally, the radial refractive meridian of the lens is determined. As shown in FIG. 10, the relationship between the radial position $\chi$ of a meridian in the lens space, the relative refractive distribution field angle $\theta$, and the vertex distance $d$ is as follows:

$$\chi = 2(d \times \tan \theta + 1.5mm)$$

The relationship between the center coordinates $(\xi, \eta)$ corresponding to the radius of curvature of each point on surface B of the lens is as follows:

$$\xi(x) = x - R(x) \sin \theta(x)$$

$$\eta(x) = R(x) \cos \theta(x) + \int_0^x \tan[\theta(x)]dx$$

Where $R(x)$ is the radius of curvature of the corresponding point on the curve, and $\theta(x)$ is determined by the following formula:

$$\sin(\theta) = \int_0^x \frac{1}{R(x)} dx$$

The sagittal height $z(x)$ of the lens at this point satisfies the formula:

$$z(x) = \int_0^x \tan(\theta)dx$$

Let the refractive power of each point on the i-th meridian be $D_i(x)$, which is defined as: $D_i(x) = (n-1)/R(x)$, where n is the refractive index of the lens. According to the above formula, the final sagittal height and the corresponding curvature center position of each point can be directly calculated from the refractive power distribution of the meridian. The $D_i(x)$ curve ($D_1(x)$, $D_2(x)$, $D_3(x)$, $D_4(x)$, ..., $D_i(x)$ as shown in FIG. 10) is the profile data extracted from a certain direction on the original lens refractive power distribution map.

The peripheral defocus control lens thus produced has an effect as shown in FIG. 4. In the figure, the dotted line at the retina represents the retinal defocus state of the human eye. The light that does not pass through the microlens converges in front of or behind the retina, and there is both myopic defocus on the front side of the retina and hyperopic defocus on the back side of the retina. Since a free-form surface is added behind the lens substrate, the refractive distribution of the free-form surface compensates for the difference in peripheral refraction of the human eye. The light that does not pass through the microlens converges on the retina due to peripheral refraction compensation, and the light that passes through the microlens has the same defocus amount due to peripheral refraction compensation. That is, after compensation, the focus position of the light is adjusted from the original front or back side of the retina to the retina, that is, the myopia and hyperopic defocus around the retina are controlled to be in a emmetropic state. With the microlens, the myopic defocus amount generated by the multi-point microlens will remain consistent.

Further screening can be performed, as shown in FIG. 5. The dotted line at the retina of the human eye in the figure represents the defocus state of the retina of the human eye itself. The light that has not passed through the microlens converges before and after the retina. There is both myopic defocus on the front side of the retina and hyperopic defocus on the back side of the retina. Since a free-form surface is added behind the lens substrate, the refractive distribution of the free-form surface can screen and control the difference in peripheral refraction of the human eye. For hyperopic defocus in the dotted line at the retina, since there is a risk of promoting myopia progression, the free-form surface in the lens compensates it to an emmetropic state for the corresponding area, and the hyperopic defocus is compensated. For myopic defocus in the dotted line at the retina, it has an inhibitory effect on myopia progression. The free-form surface of the lens corresponds to zero refractive power in the area, allowing it to be effectively preserved. In this way, the myopic defocus can be retained to the maximum extent, the hyperopic defocus is suppressed to the maximum extent, and the light passing through the microlens is compensated for peripheral refractive power, so that the final defocus is not less than the final design value. Therefore, based on the multi-point microlens defocus lens, a free-form surface with annular distribution is introduced on the rear surface of the lens, which can correct or screen the defocus at the central position and peripheral position of the human retina at the same time, so that the multi-point microlens can meet the expected defocus amount and reduce the risk of myopia progression due to hyperopic defocus in the human eye. This method can make the defocus value of each position of the retina not lower than the preset defocus amount, thereby achieving the preset treatment effect.

This embodiment uses subjective or objective optometry to identify the central refractive information of the central macula position of an individual's human retina for fitting glasses, including spherical power, cylindrical power and axial position. Then, the equivalent spherical power of the retinal periphery within different field angles of the individual human eye is obtained as the peripheral refractive power through equipment such as refractive topography, wide-angle refractometer, and window refractometer. Then, the refractive power of the central macula position is subtracted from the peripheral refractive power corresponding to different field angles of the human eye to obtain the relative refractive distribution matrix of the human eye, where the refractive power of the central macula of the retina is equal to the equivalent spherical power, which is numerically equal to the spherical power plus 1/2 of the cylindrical power. The surface height matrix of the defocus control lens is then inverted and calculated based on the relative refractive distribution matrix of the human eye. Finally, defocus lenses are made according to the lens surface height matrix. The peripheral defocus control lens produced in this way can correct or screen the defocus of the central position and the peripheral position of the human retina at the same time, because a free-form surface with annular distribution is introduced on the rear surface of the lens based on the multi-point microlens defocus lens, so that the multi-point microlens can provide the expected defocus amount and reduce the risk of myopia progression caused by hyperopic defocus of the human eye. Through this method, the defocus value of each position of the retina can be made not lower than the preset defocus amount, thereby achieving the preset treatment effect.

The terms "including", "comprising" or any other variation thereof are intended to cover non-exclusive inclusions, so that a process, method, article or system including a series of elements includes not only those elements but also other elements not explicitly listed, or also includes elements inherent to such process, method, article or system. Without further limitation, an element qualified by the statement "including one..." does not exclude the existence of other identical elements in the process, method, article or system including that element.

The above-mentioned serial numbers of the embodiments of the present application are for description only and do not represent the advantages or disadvantages of the embodiments.

Through the description of the above embodiments, those skilled in the art can clearly understand that the above embodiment method can be implemented by means of software plus a necessary general hardware platform, and of course it can also be implemented by hardware, but in many cases the former is a better implementation. Based on this understanding, the technical solution of the present application or the part that contributes to the prior art can be embodied in the form of a software product, which is stored in a storage medium (such as a read-only memory/random access memory, a disk, an optical disk), and includes several instructions for enabling a terminal device (which may be a mobile phone, a computer, a server, or a network device, etc.) to execute the methods described in various embodiments of the present application.

The above are only preferred embodiments of the present application and do not limit the scope of the present application. Any equivalent structural or procedural transformations made by using the contents of the specification and drawings of the present application, or directly or indirectly applied in other related technical fields, shall be included in the scope of the present application.

**Claims**

1. A peripheral defocus control lens, **characterized by** comprising:

   a substrate;
   a microlens array; and
   a free-form surface, wherein:

   the substrate is a main body region of the lens and has a spherical surface;
   the microlens array is arranged at an outer surface of the substrate and is configured to provide myopic defocus; and
   the free-form surface is distributed at an inner surface of the substrate and is configured to compensate for or filter refractive deviations among peripheral refractions of a human eye.

2. The peripheral defocus control lens according to claim 1, wherein:

   the substrate is provided with a central optical zone and an annular zone, and the annular zone comprises an annular defocus zone and a defocus compensation zone;
   the central optical zone is provided at a center of the substrate and is configured to correct central ametropia of the human eye;
   the annular zone surrounds the central optical zone;
   the annular defocus zone is provided at the outer surface of the substrate, and the microlens array is arranged in the annular defocus zone; and
   the defocus compensation zone is provided at the inner surface of the substrate, and the free-form surface is distributed in the defocus compensation zone.

3. The peripheral defocus control lens according to claim 2, wherein a position of the free-form surface corresponds to a position of the microlens array to compensate for or filter refractive deviations among peripheral refractions of the human eye.

4. The peripheral defocus control lens according to claim 3, wherein the microlens array is arranged in a ten-ring array, the microlens array comprises a plurality of microlenses, and each of the microlenses is equidistantly arranged in a tangential direction.

5. The peripheral defocus control lens according to claim 4, wherein each of the microlens has a diameter of 1.0 mm, a center-to-center distance between adjacent microlenses is 1.5 mm, and a distance between a center of an innermost microlens of the microlens array and a center of the central optical zone is 5 mm.

6. The peripheral defocus control lens according to claim 2, wherein the central optical zone has a radius of less than 4.5 mm, and the annular zone has a radius ranging from 4.5 mm to 20.5 mm.

7. The peripheral defocus control lens according to claim 4, wherein a number of microlenses in each ring of the ten-ring array of the microlens array is 20, 26, 32, 38, 44, 50, 56, 62, 68 and 74 sequentially from the inside to the outside, and the microlenses in each ring are uniformly and equidistantly distributed in a circular array on the respective ring.

8. The peripheral defocus control lens according to claim 4, wherein each of the microlens has a defocus amount ranging from 1.0 D to 5.0 D.

9. A method for manufacturing a peripheral defocus control lens, applied to the peripheral defocus control lens according to any one of claims 1 to 8, the method **characterized by** comprising:

   acquiring central refractive information of a macula at the center of a retina of a human eye, and peripheral refractive information corresponding to a periphery of the retina within different field angles of the human eye;
   determining a relative refractive distribution matrix of the human eye according to the central refractive information and the peripheral refractive information;
   performing inversion on the relative refractive distribution matrix of the human eye to obtain a surface height matrix; and
   manufacturing the peripheral defocus control lens based on the surface height matrix.

10. The method for manufacturing the peripheral defocus control lens according to claim 9, wherein the central refractive information comprises spherical power and cylindrical power, and the determining the relative refractive distribution matrix of the human eye according to the central refractive information and the peripheral refractive information comprises:

   determining a central diopter of the macula at the center of the retina of the human eye according to the spherical power and the cylindrical power;
   extracting peripheral refractive distribution data corresponding to different field angles of the human eye from the peripheral refractive information; and
   subtracting the central diopter from the peripheral refractive distribution data to obtain the relative refractive distribution matrix of the human eye.

FIG. 1

FIG. 2

FIG. 3

Substrate

Light passing through the microlens

Microlens

Actual human eye

Light not passing through the microlens converge on the retina owing to peripheral refractive compensation

Light passing through the central optical zone

Light not passing through the microlens converge in front of and behind the retina

Light without passing through the microlens

Free-form surface

Light passing through the microlens have the same defocus amount owing to peripheral refractive compensation

FIG. 4

Substrate

Light passing through the microlens

Microlens

Actual human eye

Myopic defocus is retained

Light passing through the central optical zone

Light not passing through the microlens converge in front of and behind the retina

Light without passing through the microlens

Hyperopic defocus is compensated

Free-form surface

The defocus amount of light passing through the microlens is not less than the designed value due to peripheral refractive compensation

FIG. 5

FIG. 6

FIG. 7

FIG. 8

FIG. 9

$D_1(x)$

$D_2(x)$

$D_3(x)$

$D_4(x)$ ● ● ●

$D_i(x)$

Defocus Compensation
Zone

FIG. 10

acquiring central refractive information of a macula at the center of a retina of a human eye, and peripheral refractive information corresponding to the periphery of the retina within different field angles of the human eye ⟋ S10

determining a relative refractive distribution matrix of the human eye according to the central refractive information and the peripheral refractive information ⟋ S20

performing inversion on the relative refractive distribution matrix of the human eye to obtain a surface height matrix ⟋ S30

manufacturing the peripheral defocus control lens based on the surface height matrix ⟋ S40

FIG. 11

individual's eyeglass prescription: spherical power, cylindrical power and axial position

⬇

peripheral refractive data of individual human eye

⬇

the relative refractive distribution matrix of the individual human eye

⬇

the surface height matrix of the defocus control lens

⬇

manufacturing of the defocus control lens

FIG. 12

## INTERNATIONAL SEARCH REPORT

| International application No. |
| --- |
| **PCT/CN2025/096870** |

**A.    CLASSIFICATION OF SUBJECT MATTER**

G02C7/06(2006.01)i

According to International Patent Classification (IPC) or to both national classification and IPC

**B.    FIELDS SEARCHED**

Minimum documentation searched (classification system followed by classification symbols)

IPC: G02C

Documentation searched other than minimum documentation to the extent that such documents are included in the fields searched

Electronic data base consulted during the international search (name of data base and, where practicable, search terms used)

CNTXT, WPABSC, ENTXTC, WPABS, ENTXT, CJFD: 深圳盛达同泽科技有限公司, 高帆, 冬雪川, 熊利利, 眼镜, 镜片, 近视, 屈光, 矫正, 离焦, 微透镜, 阵列, 环, 圈, 外, 自由曲面, 内, 补偿, 弥补, 抵消, 偏移, 偏差, 偏离, glass??, spectacle?, lens??, eyeglass??, defocus, out-of-focus, micro-lens, array, compensat+, offset+, free-form surface?

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 118732301 A (SHENZHEN THONDAR TECHNOLOGY CO., LTD.) 01 October 2024 (2024-10-01)<br>claims 1-10 | 1-10 |
| X | CN 116027571 A (BEIJING TONGREN HOSPITAL, CAPITAL MEDICAL UNIVERSITY et al.) 28 April 2023 (2023-04-28)<br>description, paragraphs [0041]-[0062], and figures 1-4 | 1-10 |
| A | CN 117590624 A (DANYANG BAIYISHI OPTICAL GLASSES CO., LTD.) 23 February 2024 (2024-02-23)<br>entire document | 1-10 |
| A | CN 217386029 U (SHENZHEN THONDAR TECHNOLOGY CO., LTD.) 06 September 2022 (2022-09-06)<br>entire document | 1-10 |
| A | CN 218240583 U (JIANGSU MASON OPTICAL TECHNOLOGY CO., LTD.) 06 January 2023 (2023-01-06)<br>entire document | 1-10 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 August 2025** | **18 August 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/096870**

| C. | DOCUMENTS CONSIDERED TO BE RELEVANT | | |
|---|---|---|
| Category* | Citation of document, with indication, where appropriate, of the relevant passages | Relevant to claim No. |
| A | US 2024012270 A1 (PLUM NEEDLE TECHNOLOGY INC.) 11 January 2024 (2024-01-11) entire document | 1-10 |

Form PCT/ISA/210 (second sheet) (July 2022)

## INTERNATIONAL SEARCH REPORT
### Information on patent family members

International application No.

**PCT/CN2025/096870**

| Patent document cited in search report | | | Publication date (day/month/year) | Patent family member(s) | Publication date (day/month/year) |
|---|---|---|---|---|---|
| CN | 118732301 | A | 01 October 2024 | None | |
| CN | 116027571 | A | 28 April 2023 | None | |
| CN | 117590624 | A | 23 February 2024 | None | |
| CN | 217386029 | U | 06 September 2022 | None | |
| CN | 218240583 | U | 06 January 2023 | None | |
| US | 2024012270 | A1 | 11 January 2024 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410827784